# EUROPEAN PATENT APPLICATION

(11) **EP 2 902 227 A1**
(43) Date of publication of application: **05.08.2015**
(21) Application number: 15153063.1
(22) Date of filing: 29.01.2015
(51) Int. Cl.: B60J 5/04, B60N 2/14

(54) **Vehicle with sliding door**

(30) Priority: 31.01.2014 JP 2014017902
(71) Applicant: Toyota Jidosha Kabushiki Kaisha, Toyota-shi, Aichi-ken 471-8571 (JP)
(72) Inventor: Ajisaka, Satoshi, TOYOTA-SHI, AICHI-KEN, 471-8571 (JP)
(74) Representative: Intès, Didier Gérard André

(57) **Abstract**

A vehicle (10) includes: a front side door (18) configured to open and close a vehicle front side of a door opening (16) and including a door opening degree sensor (22); a rear sliding door (24) configured to open and close a vehicle rear side of the door opening (16) and including an electrically-driven power unit (26); a front seat (30) pivotable toward an outer side in a vehicle width direction and including a front seat angle sensor (36); a door opening degree sensor 22 configured to detect an opening degree of the front side door (18); and a control device (42) configured to derive that magnitude of the door opening (16) which allows an occupant to easily get on and off the vehicle and a necessary rear sliding door moving amount based on the opening degree of the front side door (18) and a pivoting angle of the front seat (30), and to control the electrically-driven power unit (26) to open-operate the rear sliding door (24).

## Description

### BACKGROUND OF THE INVENTION

### 1. Field of the Invention

The present invention relates to a vehicle with a sliding door.

### 2. Description of Related Art

As described in Japanese Patent Application Publication No. 2007-023549 (JP 2007-023549 A), for example, some vehicles like a station wagon and a minivan have a vehicle side portion provided with a hinge-type front side door on an outer side of a front seat in a vehicle width direction, and employ a slide-type rear sliding door to facilitate the getting on and off of an occupant outside a rear seat in the vehicle width direction. The vehicle side portion has a so-called pillarless structure in which no center pillar (B-pillar) is provided between the front side door and the rear sliding door. On that account, at the time of an open operation of the front side door, the rear sliding door is opened in association with that, so a large door opening in which a door opening on a front-side-door side is connected with a door opening on a rear-sliding-door side is opened. This improves the getting on and off characteristics at the time of getting off the vehicle to a vehicle outside and at the time of getting on the vehicle from the vehicle outside.

However, the configuration described in JP 2007-023549 A is such that when the front side door is open-operated, the rear sliding door is also open-operated in association with that. When a distance between the vehicle and an inner wall of a parking space where the vehicle is parking is not sufficient or when another vehicle is adjacent to the vehicle and a space around the vehicle is not sufficient, the front side door cannot be opened sufficiently (to such an extent that the getting on and off of the occupant is not obstructed). In view of this, even if the rear sliding door is open-operated and the door opening on the rear-sliding-door side is opened, the door opening is not sufficiently opened on the outer side of the front seat in the vehicle width direction. Besides, the front seat remains facing a vehicle traveling direction. In view of this, there is room for the improvement in the getting on and off characteristics of the occupant on the front seat, in the related art.

### SUMMARY OF THE INVENTION

The present invention provides a vehicle with a sliding door which vehicle is able to improve the getting on and off characteristics of an occupant on a front seat in a state where a front side door cannot be opened sufficiently.

A first aspect of the present invention relates to a vehicle with a sliding door. The vehicle with a sliding door includes: a door opening provided in a side portion of the vehicle; a front side door provided on a vehicle front side of the door opening, the front side door being configured such that its front end portion is pivotally supported and its rear end portion includes a first center pillar constituting portion thereinside, the front side door being configured to open and close the vehicle front side of the door opening, the front side door being further configured to form a center pillar by the first center pillar constituting portion provided inside the rear end portion when the front side door is closed; a rear sliding door provided on a vehicle rear side of the door opening and behind the front side door, the rear sliding door being configured such that its front end portion includes a second center pillar constituting portion thereinside, the rear sliding door being configured to be slidable along the side portion of the vehicle and to open and close the vehicle rear side of the door opening, the rear sliding door being further configured to form the center pillar by the second center pillar constituting portion provided inside the front end portion when the rear sliding door is closed; and a front seat provided on a vehicle compartment side of the front side door, the front seat being pivotable around a shaft along a vehicle up-down direction so that a seat portion thereof is turned toward an outer side in a vehicle width direction.

According to the above aspect, when an occupant sitting on the front seat gets off the vehicle, the occupant on the front seat opens the front side door. At this time, the front side door is opened such that that part of the door opening which is on a rear-end-portion side opposite to the end portion provided with a hinge is opened most. Then, in order to turn a front face of a body of the occupant toward that door opening on the rear-end-portion side which is opened more largely, the occupant on the front seat pivots the front seat toward the rear-end-portion side of the front side door, that is, the outer side in the vehicle width direction. This allows the occupant on the front seat to get on and off the vehicle from that door opening on the rear-end-portion side which is opened most. Further, in a case where the vehicle is parked in a space where the front side door cannot be opened sufficiently, the occupant on the front seat pivots the front seat and opens the rear sliding door. At this time, the center pillar constituted by the first center pillar constituting portion provided inside the rear end portion of the front side door and the second center pillar constituting portion provided inside the front end portion of the rear sliding door moves from the door opening along with the pivoting of the front side door and the movement of the rear sliding door. Consequently, the door opening is opened further largely, so that the occupant can get on and off the vehicle from the door opening.

The vehicle with a sliding door according to the above aspect has an excellent effect of being able to markedly improve the getting on and off characteristics of the occupant on the front seat in a state where the front side door cannot be opened sufficiently.

A second aspect of the present invention relates to a vehicle with a sliding door. The vehicle with a sliding door includes: a door opening provided in a side portion of the vehicle; a front side door provided on a vehicle front side of the door opening, the front side door being configured such that its front end portion is pivotally supported, the front side door being configured to open and close the vehicle front side of the door opening; a rear sliding door provided on a vehicle rear side of the door opening and behind the front side door, the rear sliding door being configured to be slidable along the side portion of the vehicle and to open and close the vehicle rear side of the door opening; a door driving portion configured to open and close the rear sliding door; a front seat provided on a vehicle compartment side of the front side door, the front seat being pivotable around a shaft along a vehicle up-down direction so that a seat portion thereof is turned toward an outer side in a vehicle width direction; door angle detecting means configured to detect an opening degree of the front side door along with an opening-closing operation of the front side door; seat angle detecting means configured to detect a pivoting angle of the front seat along with pivoting of the front seat; and control means configured to control the door driving portion based on detection results of the door angle detecting means and the seat angle detecting means. Based on the detection results of the door angle detecting means and the seat angle detecting means, when the control means determines that the vehicle is parked in a space where the front side door is able to be opened sufficiently, the control means controls the rear sliding door so as not to be open-operated. Based on the detection results of the door angle detecting means and the seat angle detecting means, when the control means determines that the vehicle is parked in a space where the front side door is not able to be opened sufficiently, the control means controls the door driving portion to open-operate the rear sliding door.

According to the above aspect, when the occupant sitting on the front seat gets off the vehicle, the occupant opens the front side door in a state where the control means is operated, and pivots the front seat around the shaft along the vehicle up-down direction so as to be turned to the outer side in the vehicle width direction. At this time, an opening degree of the front side door is detected by the door angle detecting means along with an opening-closing operation of the front side door, and a pivoting angle of the front seat is detected by the seat angle detecting means along with the pivoting of the front seat. Based on these detection results, when the control means determines that the vehicle is parked in a space where the front side door can be opened sufficiently, the rear sliding door is controlled so as not to be open-operated. In the meantime, when the control means determines that the vehicle is parked in a space where the front side door cannot be opened sufficiently, the control means derives, from the detection results, that magnitude of the door opening which allows the occupant to easily get on and off the vehicle and a necessary rear sliding door moving amount, and then outputs a driving signal to the door driving portion so that the rear sliding door is open-operated just by the necessary rear sliding door moving amount. The door driving portion opens the rear sliding door based on the driving signal. Accordingly, the door opening is opened with the magnitude that allows the occupant to easily get off the vehicle. Herewith, the front seat is pivoted toward the outer side in the vehicle width direction, so that a front face of a body of the occupant sitting on the front seat is turned toward a direction nearing that vehicle rear side of the door opening which is opened due to the open-operation of the rear sliding door. This allows the occupant to get off the vehicle from the door opening without twisting the body greatly.

Further, when the occupant outside the vehicle gets on the vehicle, an opening degree of the front side door is detected by the door angle detecting means along with an opening-closing operation of the front side door, and a pivoting angle of the front seat pivoted when the occupant got off the vehicle is detected by the seat angle detecting means. Based on these detection results, when the control means determines that the vehicle is parked in a space where the front side door can be opened sufficiently, the rear sliding door is controlled so as not to be open-operated. In the meantime, when the control means determines that the vehicle is parked in a space where the front side door cannot be opened sufficiently, the control means derives, from the detection results, that magnitude of the door opening which allows the occupant to easily get on and off the vehicle and a necessary rear sliding door moving amount, and then outputs a driving signal to the door driving portion so that the rear sliding door is open-operated just by the necessary rear sliding door moving amount. The door driving portion opens the rear sliding door based on the driving signal. Accordingly, the door opening is opened with the magnitude that allows the occupant to easily get on the vehicle. This allows the occupant outside the vehicle to easily enter the vehicle compartment. Further, since the front seat is turned to the outer side in the vehicle width direction due to the pivoting at the time of getting off the vehicle, the occupant can easily sit on the front seat.

The vehicle with a sliding door according to the above aspect has an excellent effect of being able to markedly improve, with a fewer steps, the getting on and off characteristics of the occupant on the front seat in a state where the front side door cannot be opened sufficiently.

A third aspect of the present invention relates to a vehicle with a sliding door. The vehicle with a sliding door includes: a door opening provided in a side portion of the vehicle; a front side door provided on a vehicle front side of the door opening, the front side door being configured such that its front end portion is pivotally supported, the front side door being configured to open and close the vehicle front side of the door opening; a rear sliding door provided on a vehicle rear side of the door opening and behind the front side door, the rear sliding door being configured to be slidable along the side portion of the vehicle and to open and close the vehicle rear side of the door opening; a door driving portion configured to open and close the rear sliding door; a front seat provided on a vehicle compartment side of the front side door, the front seat being pivotable around a shaft along a vehicle up-down direction so that a seat portion thereof is turned toward an outer side in a vehicle width direction; door angle detecting means configured to detect an opening degree of the front side door along with an opening-closing operation of the front side door; a seat driving portion provided in the front seat and configured to pivot the front seat; and control means configured to control the door driving portion and the seat driving portion based on a detection result of the door angle detecting means. Based on the detection result of the door angle detecting means, when the control means determines that the vehicle is parked in a space where the front side door is able to be opened sufficiently, the control means controls the rear sliding door so as not to be open-operated. Based on the detection result of the door angle detecting means, when the control means determines that the vehicle is parked in a space where the front side door is not able to be opened sufficiently, the control means controls the seat driving portion to pivot the front seat, and the control means controls the door driving portion to open-operate the rear sliding door.

According to the above aspect, an opening degree of the front side door is detected by the door angle detecting means along with the opening-closing operation of the front side door. Based on the detection result, when the control means determines that the vehicle is parked in a space where the front side door can be opened sufficiently, the rear sliding door is controlled so as not to be open-operated. In the meantime, when the control means determines that the vehicle is parked in a space where the front side door cannot be opened sufficiently, the control means derives, from the detection result, a pivoting angle that allows the occupant to easily get on and off the vehicle when the front seat is pivoted around the shaft along the vehicle up-down direction, that magnitude of the door opening which allows the occupant to easily get on and off the vehicle, and a necessary rear sliding door moving amount. Based on the derivation results, the control means outputs a driving signal to the seat driving portion so as to pivot the front seat toward the outer side in the vehicle width direction up to the pivoting angle that allows the occupant to easily get on and off the vehicle, so that the seat driving portion pivots, based on the driving signal, the front seat to the pivoting angle that allows the occupant to easily get on and off the vehicle. At the same time, the control means outputs a driving signal to the door driving portion so that the rear sliding door is open-operated just by the necessary rear sliding door moving amount. The door driving portion accordingly opens the rear sliding door based on the driving signal. Accordingly, just by the open operation of the front side door, the door opening is opened with the magnitude that allows the occupant to easily get on and off the vehicle, and the front seat is automatically pivoted toward the outer side in the vehicle width direction up to the pivoting angle that allows the occupant to easily get on and off the vehicle. That is, when the occupant sitting on the front seat gets off the vehicle, a front face of a body of the occupant sitting on the front seat is automatically turned to a direction nearing that vehicle rear side of the door opening which is opened due to the open-operation of the rear sliding door. This allows the occupant to get off the vehicle from the door opening without twisting the body greatly. Further, when the occupant outside the vehicle gets on the vehicle, the door opening is opened with the magnitude that allows the occupant to easily get on the vehicle, so that the occupant can easily enter the vehicle compartment. Besides, the front seat is automatically turned to the outer side in the vehicle width direction, so that the occupant can easily sit on the front seat.

The vehicle with a sliding door according to the above aspect has an excellent effect of being able to markedly improve, with a further fewer steps, the getting on and off characteristics of the occupant on the front seat in a state where the front side door cannot be opened sufficiently.

### BRIEF DESCRIPTION OF THE DRAWINGS

Features, advantages, and technical and industrial significance of exemplary embodiments of the invention will be described below with reference to the accompanying drawings, in which like numerals denote like elements, and wherein:
FIG. 1 is a perspective view illustrating a vehicle with a sliding door according to a first embodiment of the present invention;
FIG. 2 is a perspective view illustrating an inside of a cabin of the vehicle with a sliding door according to the first embodiment of the present invention;
FIG. 3 is a plan view illustrating the inside of the cabin at the time when a front side door is opened and a front seat is pivoted in the vehicle with a sliding door according to the first embodiment of the present invention;
FIG. 4 is a plan view illustrating the inside of the cabin at the time when a rear sliding door is opened with a small opening degree of the front side door in the vehicle with a sliding door according to the first embodiment of the present invention;
FIG. 5 is a perspective view illustrating an inside of a cabin of a vehicle with a sliding door according to a second embodiment of the present invention;
FIG. 6 is a plan view illustrating the inside of the cabin at the time when a control device is operated with a small opening degree of a front side door in the vehicle with a sliding door according to the second embodiment of the present invention;
FIG. 7 is a plan view illustrating the inside of the cabin at the time when the opening degree of the front side door is large in the vehicle with a sliding door according to the second embodiment of the present invention;
FIG. 8 is a plan view illustrating an inside of a cabin at the time when a control device is operated with a small opening degree of a front side door in a vehicle with a sliding door according to a third embodiment of the present invention;
FIG. 9 is a plan view illustrating an inside of a cabin at the time when a control device is operated with a small opening degree of a front side door in a vehicle with a sliding door according to a comparative example;
FIG. 10 is a flowchart to describe a control process at the time when an occupant gets off the vehicle with a sliding door according to the second embodiment of the present invention; and
FIG. 11 is a flowchart to describe a control process at the time when an occupant gets off the vehicle with a sliding door according to the third embodiment of the present invention.

### DETAILED DESCRIPTION OF EMBODIMENTS

### (First Embodiment)

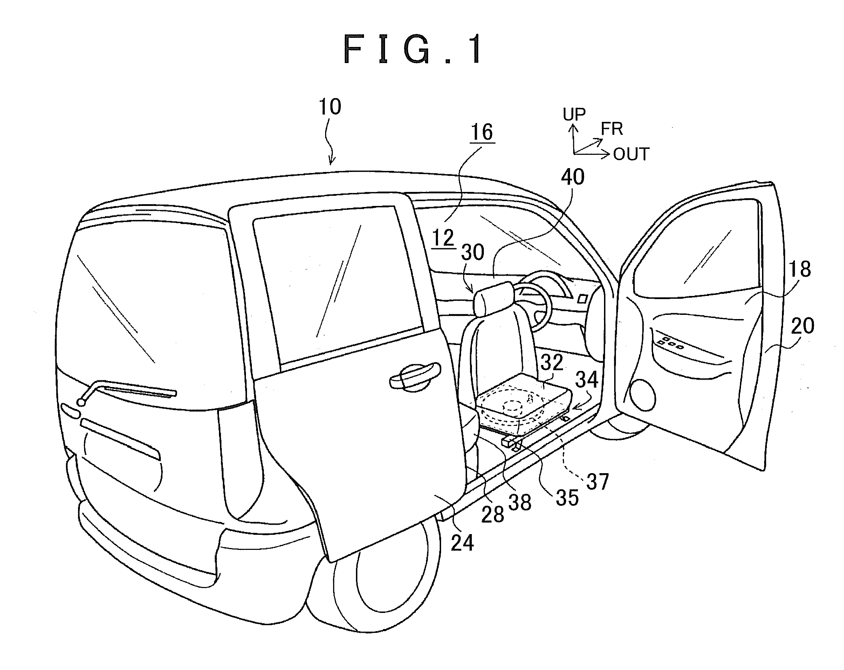

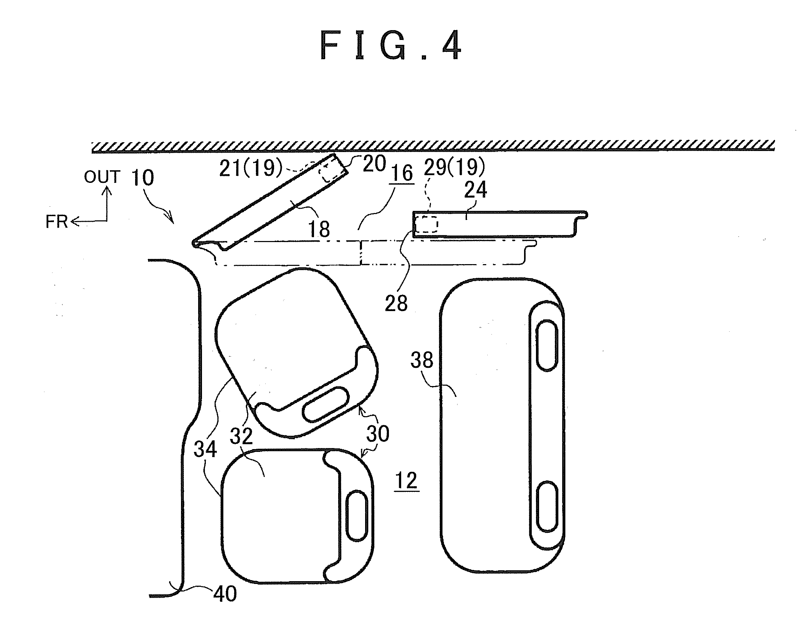

The following describes a vehicle with a sliding door according to a first embodiment of the present invention with reference to FIGS 1 to 4. Note that an arrow UP in the figures indicates an upper direction of the vehicle, an arrow FR indicates a forward direction of the vehicle, and an arrow OUT indicates an outer side in a vehicle width direction.

As illustrated in FIG. 1, a door opening 16 provided in a side portion of the vehicle and opened toward a vehicle outside is provided on an outer side, in the vehicle width direction, of a cabin 12 as a passenger compartment in a vehicle 10 as the vehicle with a sliding door. Further, a front side door 18 pivotally supported by a hinge (not shown) is provided on a vehicle front side of the door opening 16. The front side door 18 is configured such that a free end portion 20 is pivotable toward the outer side in the vehicle width direction around the hinge provided on the vehicle front side of the door opening 16. The free end portion 20 is a rear end portion placed on an opposite side to that end portion of the front side door 18 which is attached to the hinge. Hereby, the front side door 18 is configured to open and close the vehicle front side of the door opening 16. Further, the free end portion 20 of the front side door 18 includes a center pillar constituting portion 21 thereinside. The center pillar constituting portion 21 is a first center pillar constituting portion forming a center pillar 19 in a closed state of the front side door 18.

A rear sliding door 24 configured to be slidable along the vehicle side portion is provided on a vehicle rear side of the door opening 16 and behind the front side door 18. The rear sliding door 24 is slidable in a vehicle front-rear direction along a slide rail (not shown) provided in the vehicle side portion, and is configured to open and close the vehicle rear side of the door opening 16. Further, a front end portion 28 of the rear sliding door 24 includes a center pillar constituting portion 29 thereinside. The center pillar constituting portion 29 is a second center pillar constituting portion forming the center pillar 19 in a closed state of the rear sliding door 24.

In a state where the front side door 18 and the rear sliding door 24 are closed, the free end portion 20 of the front side door 18 abuts with the front end portion 28 of the rear sliding door 24 so as to form the center pillar 19. That is, the vehicle 10 has a so-called pillarless structure in which the center pillar 19 moves from the door opening 16 due to the pivoting of the front side door 18 and the movement of the rear sliding door 24. Accordingly, when the front side door 18 and the rear sliding door 24 are both opened, the door opening 16 is opened with a magnitude in which that vehicle front part of the door opening 16 which is opened by the front side door 18 is continuous with that vehicle rear part of the door opening 16 which is opened by the rear sliding door 24.

A front seat 30 is provided in an inner side (a cabin-12 side), in the vehicle width direction, with respect to the front side door 18, in the cabin 12. A seat pedestal 34 is provided on a vehicle lower side of a seat seating face 32 as a seat portion of the front seat 30, and the seat pedestal 34 is provided with a sliding mechanism 35 slidable in the vehicle front-rear direction and a pivoting mechanism 37 pivotable around a shaft along the vehicle up-down direction. Further, the pivoting mechanism 37 is provided with a pivoting lock mechanism (not shown). The pivoting lock mechanism is configured to have a lock state in which the front seat 30 is held at a given pivoting angle, and an unlock state in which the pivoting of the front seat 30 by the pivoting mechanism 37 around the shaft along the vehicle up-down direction is allowed. Accordingly, the front seat 30 is movable in the vehicle front-rear direction by the sliding mechanism 35, and pivotable around the shaft along the vehicle up-down direction by the pivoting mechanism 37. In the present embodiment, the front seat 30 can pivot by a predetermined angle from a vehicle forward direction toward the outer side in the vehicle width direction, and can be held at a given pivoting angle.

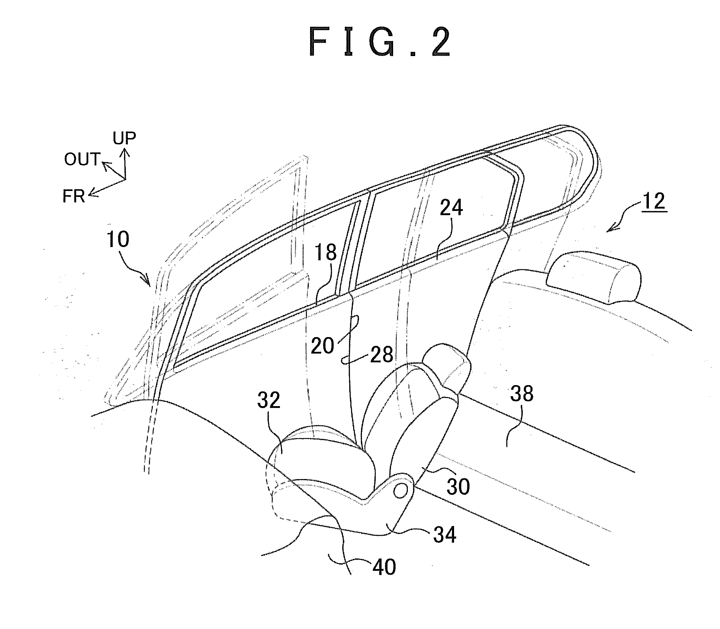

Further, as illustrated in FIG. 2, a so-called bench-seat rear seat 38 extending along the vehicle width direction in the cabin 12, for example, is provided in an inner side, in the vehicle width direction, with respect to the rear sliding door 24, in the cabin 12. The rear seat 38 is placed at a position distanced from a pivoting range of the front seat 30. Further, an instrument panel 40 is provided in a front part of the cabin 12.

### (Operation/Effect of First Embodiment)

Next will be described an operation and an effect of the first embodiment.

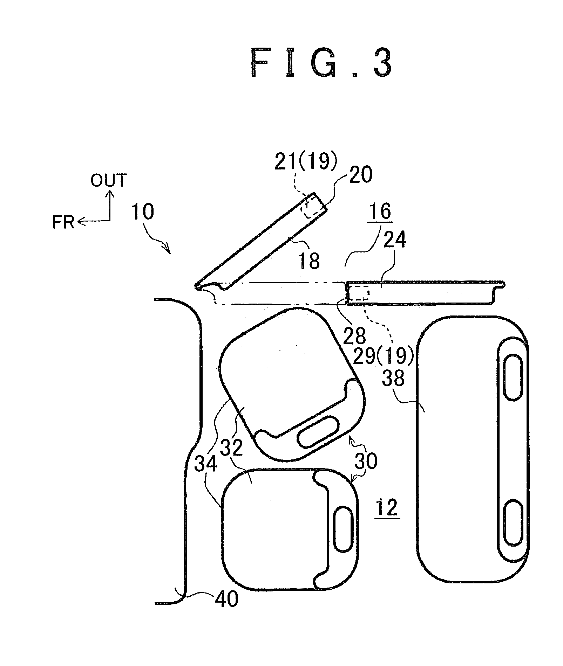

In the present embodiment, as illustrated in FIG. 3, when an occupant sitting on the front seat 30 gets off the vehicle 10, the occupant on the front seat 30 opens the front side door 18. At this time, the front side door 18 is opened such that the door opening 16 on a free-end-portion-20 side that is opposite to that end portion of the front side door 18 which is provided with the hinge is opened most. Then, in order to turn a front face of a body of the occupant on the front seat 30 toward that door opening 16 on the free-end-portion-20 side which is opened more largely, the occupant on the front seat 30 pivots the front seat 30 toward a free-end-portion-20 side of the front side door 18, that is, the outer side in the vehicle width direction. This allows the occupant on the front seat 30 to get on and off the vehicle from that door opening 16 on the free-end-portion-20 side which is opened most. Further, in a case where the vehicle 10 is parked in a space where the front side door 18 cannot be opened sufficiently, the occupant on the front seat 30 pivots the front seat 30 and opens the rear sliding door 24. At this time, the center pillar 19 constituted by the center pillar constituting portion 21 provided inside the free end portion 20 of the front side door 18 and the center pillar constituting portion 29 provided inside the front end portion 28 of the rear sliding door 24 moves from the door opening 16 along with the pivoting of the front side door 18 and the movement of the rear sliding door 24. Consequently, the door opening 16 is opened further largely, so that the occupant can get on and off the vehicle from the door opening 16. This can markedly improve the getting on and off characteristics of the occupant on the front seat 30 in a state where the front side door 18 cannot be opened sufficiently.

### (Second Embodiment)

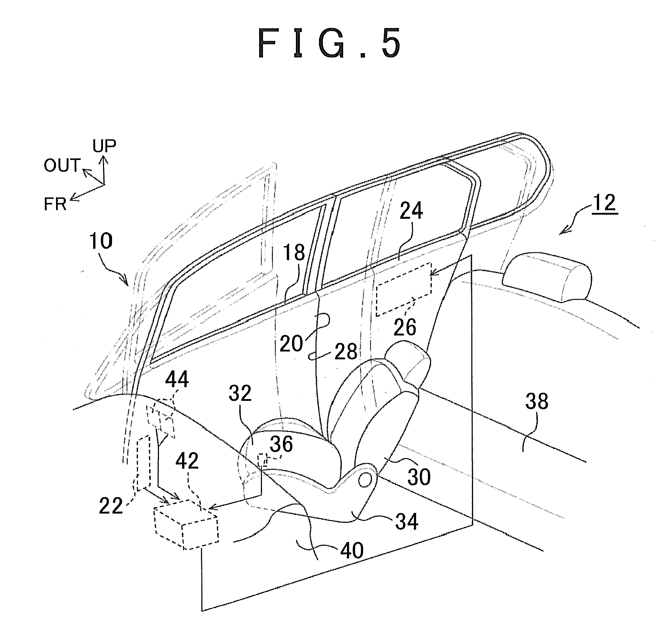

Next will be described a vehicle 10 with a sliding door according to a second embodiment of the present invention with reference to FIGS 5 to 7. Note that the same constituent as in the first embodiment has the same reference sign as in the first embodiment, and description thereof is omitted.

A basic configuration of the vehicle 10 with a sliding door according to the second embodiment is the same as the first embodiment, and has a feature in that the vehicle 10 with a sliding door is provided with an electrically-driven power unit 26 configured to open and close a rear sliding door 24, and a control device 42.

As illustrated in FIG. 5, a front side door 18 is provided with a door opening degree sensor 22 as door angle detecting means, so that an angle from a closed state of the front side door 18 at the time when the front side door 18 is opened is detectable.

The rear sliding door 24 is provided with the electrically-driven power unit 26 as a door driving portion. The electrically-driven power unit 26 includes a motor and a link mechanism (not shown), and is configured to slide a rear sliding door via the link mechanism when the motor operates.

A seat pedestal 34 is provided with a front seat angle sensor 36 as seat angle detecting means, so that an angle relative to the vehicle front-rear direction along with pivoting of a front seat 30 is detectable.

An instrument panel 40 is provided in a front part of a cabin 12. A switch 44 of a control device 42 (described later) is provided on a driver side of the instrument panel 40.

The electrically-driven power unit 26 configured to slide the rear sliding door 24 is controlled by the control device 42 as control means. The control device 42 is mainly constituted by a computer including well-known CPU, ROM, RAM (not shown), and the like, and its input side is connected to the door opening degree sensor 22, the front seat angle sensor 36, and the switch 44 via electric wires (not shown). In the meantime, an output side of the control device 42 is connected to the electrically-driven power unit 26 of the rear sliding door 24 via electric wires (not shown).

### (Operation/Effect of Second Embodiment)

Next will be described an operation and an effect of the second embodiment.

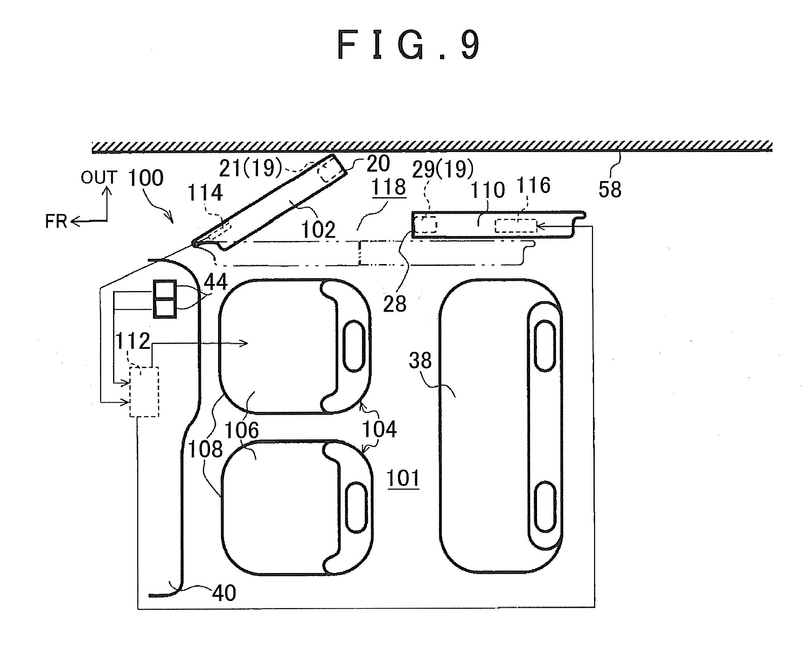

Here, the following describes the operation and effect of the present embodiment with the use of a comparative example illustrated in FIG. 9. Note that the same constituent as in the first embodiment has the same reference sign as in the first embodiment, and description thereof is omitted.

A front seat 104 is provided in an inner side, in the vehicle width direction, with respect to a front side door 102, in a cabin 101 of a vehicle 100. A seat pedestal 108 is provided on a vehicle lower side of a seat seating face 106 of the front seat 104, and the seat pedestal 108 is provided with a sliding mechanism (not shown) configured to slide only in the vehicle front-rear direction.

An automatic slide operation of a rear sliding door 110 is controlled by a control device 112. The control device 112 is mainly constituted by a computer including well-known CPU, ROM, RAM, and the like, and its input side is connected to a door opening degree sensor 114 via electric wires (not shown). In the meantime, an output side of the control device 112 is connected to an electrically-driven power unit 116 of the rear sliding door 110 via electric wires (not shown).

In a case where the control device 112 is being operated, when the front side door 102 is opened, the door opening degree sensor 114 detects that the front side door 102 is in an open state. Based on this detection result, the control device 112 outputs a driving signal to the electrically-driven power unit 116 of the rear sliding door 110 so as to open the rear sliding door 110.

In response to the driving signal from the control device 112, the electrically-driven power unit 116 of the rear sliding door 110 is driven, so that the rear sliding door 110 becomes an open state. That is, when the front side door 102 is opened, the rear sliding door 110 is automatically opened in association with that. Accordingly, a door opening 118 is opened with a magnitude in which that vehicle front side of the door opening 118 which is opened by the front side door 102 is continuous with that vehicle rear side of the door opening 118 which is opened by the rear sliding door 110.

However, when a distance between the vehicle 100 and an inner wall 58 or the like of a parking space where the vehicle 100 is parking is not sufficient or when another vehicle is adjacent to the vehicle 100 so that a space around the vehicle 100 is not sufficient, the front side door 102 cannot be opened sufficiently (to such an extent that the getting on and off of the occupant is not obstructed). As a result, even if the rear sliding door 110 is open-operated in association with the front side door 102 thus opened and the door opening 118 on a rear-sliding-door side is opened, the door opening is not sufficiently opened toward an outer side, in the vehicle width direction, of the front seat 104. Besides, the front seat 104 is facing a vehicle traveling direction. Accordingly, it is necessary for the occupant on the front seat 104 to get on and off the vehicle by twisting his/her body toward that door opening 118 on the rear-sliding-door-110 side which is opened, at the time when the occupant gets on and off the vehicle.

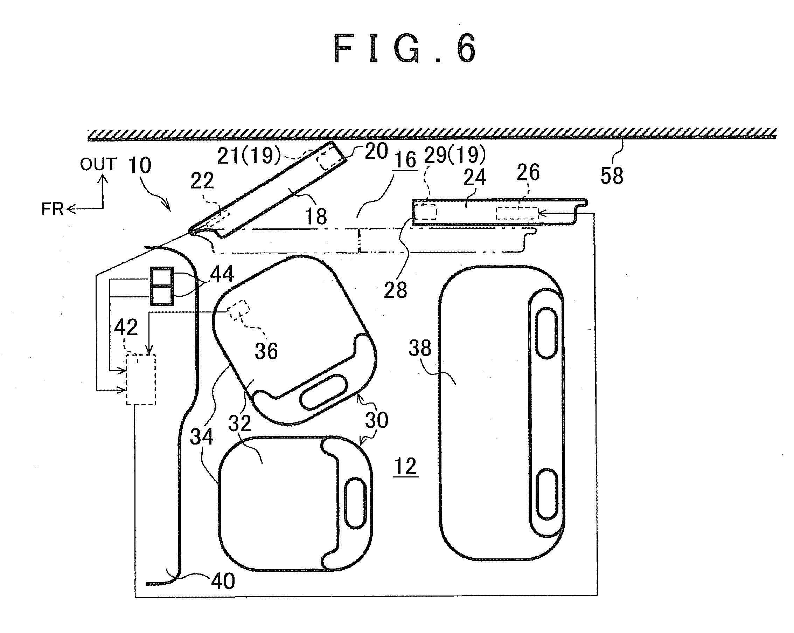

In contrast, in the present embodiment, as illustrated in FIG. 6, when the occupant sitting on the front seat 30 gets off the vehicle 10, the occupant opens the front side door 18 in a state where the control device 42 is operated by the switch 44, and pivots the front seat 30 around a shaft along the vehicle up-down direction toward the outer side in the vehicle width direction. At this time, an opening degree of the front side door 18 is detected by the door opening degree sensor 22 along with an opening-closing operation of the front side door 18, and a pivoting angle of the front seat 30 is detected by the front seat angle sensor 36 along with the pivoting of the front seat 30. Based on these detection results, when the control device 42 determines that the vehicle is parked in a space where the front side door 18 can be opened sufficiently, the rear sliding door 24 is controlled so as not to be open-operated. In the meantime, when the control device 42 determines that the vehicle is parked in a space where the front side door 18 cannot be opened sufficiently, the control device 42 derives, from the detection results, that magnitude of the door opening 16 which allows the occupant to easily get on and off the vehicle and a necessary rear sliding door moving amount, and then outputs a driving signal to the electrically-driven power unit 26 so as to open-operate the rear sliding door 24 just by the necessary rear sliding door moving amount. The electrically-driven power unit 26 opens the rear sliding door 24 based on the driving signal. As a result, the door opening is opened with the magnitude that allows the occupant to easily get off the vehicle. Herewith, the front seat 30 is pivoted toward the outer side in the vehicle width direction, so that a front face of a body of the occupant sitting on the front seat 30 is turned toward a direction nearing that vehicle rear side of the door opening 16 which is opened due to the open-operation of the rear sliding door 24. This allows the occupant to get off the vehicle from the door opening 16 without twisting the body greatly.

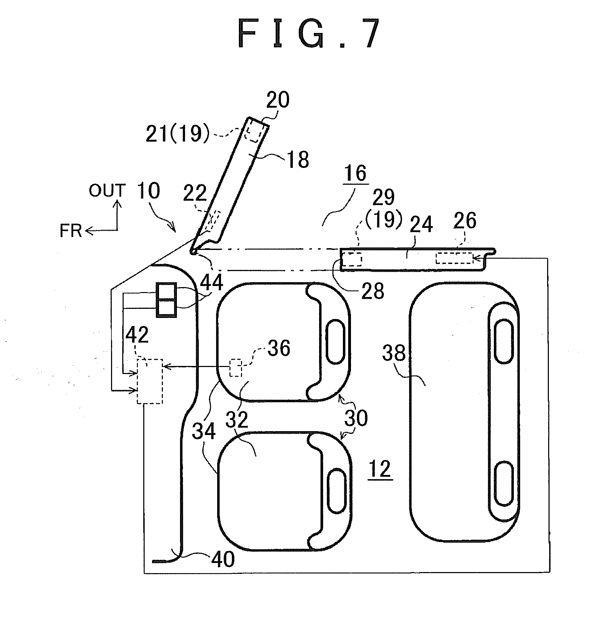

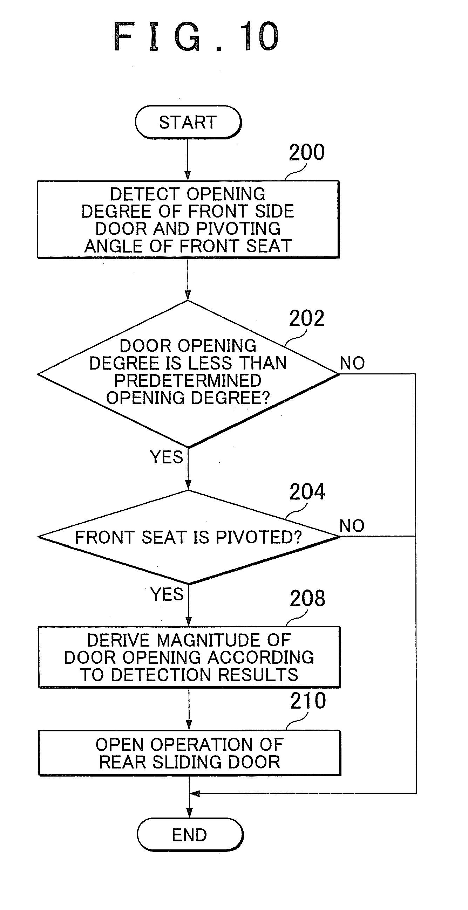

Further, with reference to FIGS. 6, 7 and a flowchart of FIG. 10 illustrating an example of an operating state of the control device 42 at the time when the occupant gets off the vehicle, the following describes the operating state of the control device 42 at the time when the occupant gets off the vehicle.

When the occupant sitting on the front seat 30 toward a vehicle forward direction gets off the vehicle, it is necessary to largely open the front side door 18 so as to largely open the vehicle front side of the door opening 16. As illustrated in FIG. 7, in a case where the vehicle 10 is parked in a parking space where the occupant can get on and off the vehicle smoothly (there is no obstruction around the front side door 18), when the occupant sitting on the front seat 30 gets off the vehicle, the occupant can largely open the front side door 18 by not less than a predetermined opening degree (for example, 20° to 35° from a closed state of the front side door) up to a position where the door opening 16 can have a magnitude that allows the occupant to get off the vehicle therefrom. Further, in a case where the occupant can get off the vehicle only by the open operation of the front side door 18, it is not necessary to pivot the front seat 30, so the front seat 30 is not pivoted. In order to increase the getting on and off characteristics, the front seat 30 may be pivoted.

When an opening degree of the front side door 18 and a pivoting angle of the front seat 30 are detected in that state (step 200 in FIG. 10), the control device 42 determines that the front side door 18 is opened by larger than the predetermined degree (step 202 in FIG. 10), and further determines that "the vehicle 10 is parked in a parking space where the occupant can get on and off the vehicle smoothly." Hereby, the control device 42 finishes the process without sending, to the electrically-driven power unit 26, a driving signal to open the rear sliding door 24. Hereby, only the front side door 18 is opened without opening the rear sliding door 24, and the occupant gets off the vehicle from the vehicle front side of the door opening 16.

Further, even in a case where the control device 42 determines that the front side door 18 is not opened by more than the predetermined opening degree, if the control device 42 determines that the front seat 30 does not pivot toward the outer side in the vehicle width direction (step 204 in FIG. 10), the control device 42 determines that "the occupant has no intention of getting off the vehicle." Hereby, the control device 42 finishes the process without sending, to the electrically-driven power unit 26, a driving signal to open the rear sliding door 24. This restrains unnecessary opening of the rear sliding door 24.

In the meantime, as illustrated in FIG. 6, in a case where the vehicle 10 is parked in a parking space where the occupant cannot get on and off the vehicle smoothly (there is an obstruction such as the inner wall 58 of the parking space or another vehicle around the front side door 18), when the occupant sitting on the front seat 30 gets off the vehicle, the occupant opens the front side door 18 just before the front side door 18 almost come in contact with the obstruction. That is, the front side door 18 cannot be opened largely by more than the predetermined opening degree, so that the front side door 18 is opened small by not more than the predetermined opening degree. Further, at this time, the occupant pivots the front seat toward the outer side in the vehicle width direction so that the occupant can easily get off the vehicle. In this state, the control device 42 determines that the front side door 18 is opened by less than the predetermined degree (step 202 in FIG. 10), and also determines that the front seat 30 is pivoted toward the outer side in the vehicle width direction (step 204 in FIG. 10). Hereby, the control device 42 determines that "the vehicle 10 is parked in a parking space where the occupant cannot get on and off the vehicle smoothly."

Note that the control device 42 determines how difficult for the occupant to get on and off the vehicle 10 smoothly in the parking space," from an opening angle of the front side door 18 detected by the door opening degree sensor 22 and the pivoting angle of the front seat 30 detected by the front seat angle sensor 36. That is, when the obstruction is close to the front side door 18, the front side door 18 is opened small by not more than the predetermined opening degree. At this time, the front side door 18 is opened such that the door opening 16 on a free-end-portion-20 side that is opposite to that end portion of the front side door 18 which is provided with a hinge is opened most. Accordingly, in order to turn a front face of a body of the occupant toward the door opening 16 that is opened more largely, the occupant pivots the front seat 30 toward the free-end-portion-20 side of the front side door 18, that is, the outer side in the vehicle width direction. In this way, as a rotation angle of the front side door 18 is smaller and as the pivoting angle of the front seat 30 is larger, the control device 42 determines how difficult for the occupant to get on and off the vehicle 10 smoothly in the parking space according to respective values of the angles.

The control device 42 derives, from the detection results, a necessary magnitude of the door opening 16 for the occupant to be able to easily get on and off the vehicle (step 208 in FIG. 10). From the result of the derivation, the control device 42 derives a necessary moving amount of the rear sliding door 24 based on the magnitude of the door opening 16 that is currently opened due to the opening of the front side door 18, and outputs a driving signal to the electrically-driven power unit 26 so that the rear sliding door 24 is opened just by the necessary moving amount of the rear sliding door 24. The electrically-driven power unit 26 opens the rear sliding door 24 based on the driving signal (step 210 in FIG. 10). Hereby, that magnitude of the door opening 16 which allows the occupant to easily get off the vehicle is secured.

Further, when the occupant outside the vehicle 10 gets on the vehicle, an opening degree of the front side door 18 is detected by the door opening degree sensor 22 along with an opening-closing operation of the front side door 18, and a pivoting angle of the front seat 30 pivoted when the occupant got off the vehicle is detected by the front seat angle sensor 36, in a similar manner to the time when the occupant gets off the vehicle. Based on these detection results, when the control device 42 determines that the vehicle is parked in a space where the front side door 18 can be opened sufficiently, the rear sliding door 24 is controlled so as not to be open-operated. In the meantime, when the control device 42 determines that the vehicle is parked in a space where the front side door 18 cannot be opened sufficiently, the control device 42 derives, from the detection results, that magnitude of the door opening 16 which allows the occupant to easily get on and off the vehicle and a necessary rear sliding door moving amount, and outputs a driving signal to the electrically-driven power unit 26 so as to open-operate the rear sliding door 24 just by the rear sliding door moving amount. The electrically-driven power unit 26 opens the rear sliding door 24 based on the driving signal. Accordingly, the door opening is opened with a magnitude that allows the occupant to easily get on the vehicle. This allows the occupant outside the vehicle to easily enter the cabin 12. Further, since the front seat 30 is turned to the outer side in the vehicle width direction due to the pivoting at the time when the occupant got off the vehicle, the occupant can easily sit on the front seat 30. This can markedly improve the getting on and off characteristics of the occupant on the front seat 30 in a state where the front side door 18 cannot be opened sufficiently.

### (Third Embodiment)

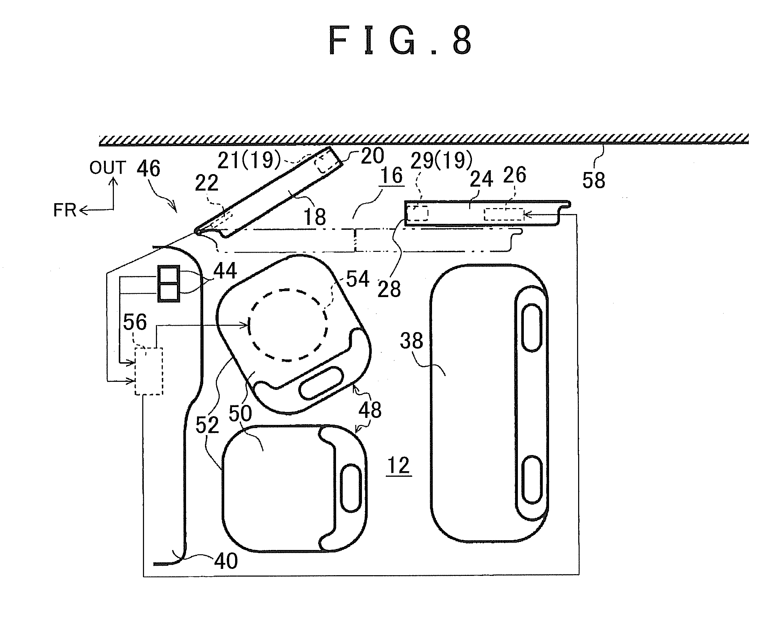

Next will be described a vehicle 46 with a sliding door according to a third embodiment of the present invention with reference to FIG. 8. Note that the same constituent as in the first embodiment has the same reference sign as in the first embodiment, and description thereof is omitted.

The vehicle 46 with a sliding door according to the third embodiment has the same basic configuration as the first embodiment, and has a feature in that a front seat 48 is provided with an electrically-driven power seat unit 54 as a seat driving portion.

Right and left front seats 48 are provided independently in an inner side, in the vehicle width direction, with respect to a front side door 18, in a cabin 12. A seat pedestal 52 is provided on a vehicle lower side of a seat seating face 50 of the front seat 48, and the seat pedestal 52 is provided with a sliding mechanism 35 slidable in the vehicle front-rear direction and a pivoting mechanism 37 pivotable around a shaft along the vehicle up-down direction. Accordingly, the front seat 48 is movable in the vehicle front-rear direction by the sliding mechanism 35, and pivotable by the pivoting mechanism 37 by a predetermined angle around the shaft along the vehicle up-down direction from the vehicle forward direction to the outer side in the vehicle width direction.

The seat pedestal 52 is provided with the electrically-driven power seat unit 54 as a seat driving portion. The electrically-driven power seat unit 54 includes a motor (not shown). When the motor is operated, the front seat is pivotable automatically.

An electrically-driven power unit 26 configured to slide a rear sliding door 24 is controlled by a control device 56 as control means. The control device 56 is mainly constituted by a computer including well-known CPU, ROM, RAM (not shown), and the like, and its input side is connected to a door opening degree sensor 22 and a switch 44 via electrical wires (not shown). In the meantime, an output side of the control device 56 is connected to the electrically-driven power unit 26 of the rear sliding door 24 and the electrically-driven power seat unit 54 via electric wires.

### (Operation/Effect of Third Embodiment)

Next will be described an operation and an effect of the third embodiment.

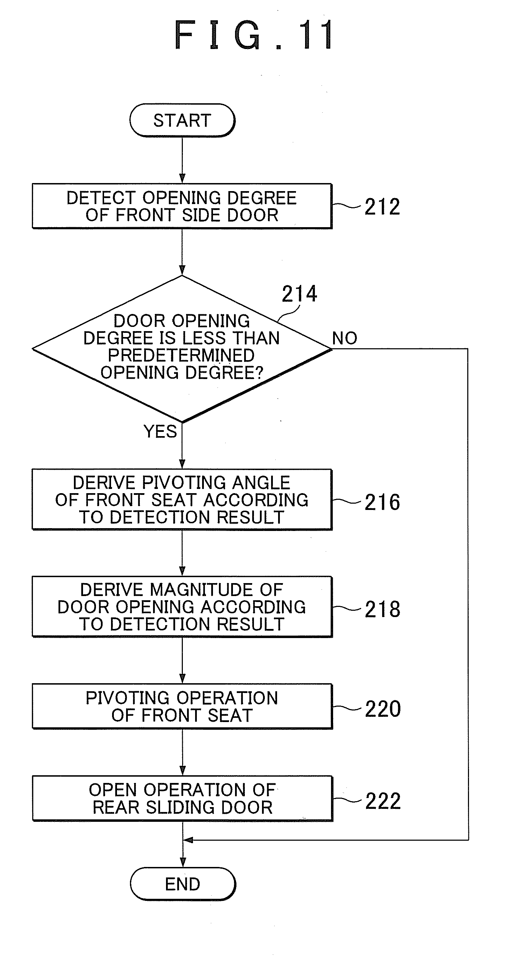

In the present embodiment, as shown in a flowchart of FIG. 11 illustrating an example of an operating state of the control device 56 at the time when the occupant gets off the vehicle, an opening degree of the front side door 18 is detected by the door opening degree sensor 22 along with an opening-closing operation of the front side door 18 (step 212 in FIG. 11). Based on this detection result, when the door opening degree is larger than a predetermined opening degree (step 214 in FIG. 11), the control device 56 determines that the front side door 18 can be opened sufficiently, that is, the vehicle is parked in a space where the occupant can get on and off the vehicle smoothly. Here, the control device 56 finishes the process without sending, to the electrically-driven power unit 26, a driving signal to open the rear sliding door 24. Accordingly, the rear sliding door 24 is not open-operated.

In the meantime, when the door opening degree is smaller than the predetermined opening degree (step 214 in FIG. 11), the control device 56 determines that the front side door 18 cannot be opened sufficiently, that is, the vehicle is parked in a space where the occupant cannot get on and off the vehicle smoothly. Then, the control device 56 derives, from the detection result, a pivoting angle that allows the occupant to easily get on and off the vehicle when the front seat 48 is pivoted around a shaft along the vehicle up-down direction (step 216 in FIG. 11). At the same time, the control device 56 derives a necessary magnitude of the door opening 16 for the occupant to be able to easily get on and off the vehicle (step 218 in FIG. 11). Based on the derivation results, the control device 56 outputs a driving signal to the electrically-driven power seat unit 54 so as to pivot the front seat 48 toward the outer side in the vehicle width direction up to a pivoting angle that allows the occupant to easily get on and off the vehicle, so that the front seat 48 is automatically pivoted to the pivoting angle that allows the occupant to easily get on and off the vehicle (step 220 in FIG. 11). Further, from the derivation result of the necessary magnitude of the door opening 16, the control device 56 outputs a driving signal to the electrically-driven power unit 26 so as to open the rear sliding door 24 just by a necessary rear sliding door moving amount. The electrically-driven power unit 26 opens the rear sliding door 24 based on the driving signal (step 222 in FIG. 11).

Accordingly, just by the open operation of the front side door 18, the door opening 16 is opened with a magnitude that allows the occupant to easily get on and off the vehicle, and the front seat 48 is automatically pivoted toward the outer side in the vehicle width direction up to the pivoting angle that allows the occupant to easily get on and off the vehicle. That is, when the occupant sitting on the front seat 48 gets off the vehicle, a front face of a body of the occupant sitting on the front seat 48 is automatically turned to a direction nearing that vehicle rear side of the door opening 16 which is opened due to the open-operation of the rear sliding door 24. This allows the occupant to get off the vehicle from the door opening 16 without twisting the body greatly. Further, when the occupant outside the vehicle gets on the vehicle, the door opening 16 is opened with a magnitude that allows the occupant to easily get on the vehicle, so that the occupant can easily enter the cabin 12. Besides, the front seat 48 is automatically turned to the outer side in the vehicle width direction, so that the occupant can easily sit on the front seat 48. This can markedly improve the getting on and off characteristics of the occupant with a fewer steps in a state where the front side door 18 cannot be opened sufficiently.

Further, depending on a parking state of the vehicle 46, even in a case where the vehicle 46 is parked in a sufficient parking space at the time when the occupant gets off the vehicle 46, there may not be a sufficient space around the front side door 18 at the time when the occupant gets on the vehicle, for some reasons such as another vehicle being parked near the vehicle 46. In this case, the occupant gets off the vehicle without pivoting the front seat 48 (see FIG. 7) at the time of getting off the vehicle. However, since the present embodiment is configured such that the front seat 48 can be automatically pivoted, when the occupant gets on the vehicle, the front seat 48 can be pivoted toward the outer side in the vehicle width direction to the pivoting angle that allows the occupant to easily get on the vehicle, based on the opening degree of the front side door 18. Hereby, it is possible to markedly improve the getting on and off characteristics of the occupant under various situations.

Embodiments of the present invention have been described above, but the present invention is not limited to the above and the embodiments may be modified in various ways to be performed.

## Claims

1. A vehicle with a sliding door **characterized by** comprising:
a door opening (16) provided in a side portion of the vehicle;
a front side door (18) provided on a vehicle front side of the door opening, the front side door being configured such that its front end portion is pivotally supported and its rear end portion includes a first center pillar constituting portion (21) thereinside, the front side door being configured to open and close the vehicle front side of the door opening, the front side door being further configured to form a center pillar (19) by the first center pillar constituting portion provided inside the rear end portion when the front side door is closed;
a rear sliding door (24) provided on a vehicle rear side of the door opening and behind the front side door, the rear sliding door being configured such that its front end portion includes a second center pillar constituting portion (29) thereinside, the rear sliding door being configured to be slidable along the side portion of the vehicle and to open and close the vehicle rear side of the door opening, the rear sliding door being further configured to form the center pillar by the second center pillar constituting portion provided inside the front end portion when the rear sliding door is closed; and
a front seat (30) provided in a vehicle compartment side with respect to the front side door, the front seat being pivotable around a shaft along a vehicle up-down direction so that a seat portion thereof is turned toward an outer side in a vehicle width direction.

2. A vehicle with a sliding door **characterized by** comprising:
a door opening (16) provided in a side portion of the vehicle;
a front side door (18) provided on a vehicle front side of the door opening, the front side door being configured such that its front end portion is pivotally supported, the front side door being configured to open and close the vehicle front side of the door opening;
a rear sliding door (24) provided on a vehicle rear side of the door opening and behind the front side door, the rear sliding door being configured to be slidable along the side portion of the vehicle and to open and close the vehicle rear side of the door opening;
a door driving portion (26) configured to open and close the rear sliding door;
a front seat (30) provided in a vehicle compartment side with respect to the front side door, the front seat being pivotable around a shaft along a vehicle up-down direction so that a seat portion thereof is turned toward an outer side in a vehicle width direction;
door angle detecting means (22) configured to detect an opening degree of the front side door along with an opening-closing operation of the front side door;
seat angle detecting means (36) configured to detect a pivoting angle of the front seat along with pivoting of the front seat; and
control means (56) configured to control the door driving portion based on detection results of the door angle detecting means and the seat angle detecting means, wherein:
based on the detection results of the door angle detecting means and the seat angle detecting means, when the control means determines that the vehicle is parked in a space where the front side door is able to be opened sufficiently, the control means controls the rear sliding door so as not to be open-operated; and
based on the detection results of the door angle detecting means and the seat angle detecting means, when the control means determines that the vehicle is parked in a space where the front side door is not able to be opened sufficiently, the control means controls the door driving portion to open-operate the rear sliding door.

3. A vehicle with a sliding door **characterized by** comprising:
a door opening (16) provided in a side portion of the vehicle;
a front side door (18) provided on a vehicle front side of the door opening, the front side door being configured such that its front end portion is pivotally supported, the front side door being configured to open and close the vehicle front side of the door opening;
a rear sliding door (24) provided on a vehicle rear side of the door opening and behind the front side door, the rear sliding door being configured to be slidable along the side portion of the vehicle and to open and close the vehicle rear side of the door opening;
a door driving portion (26) configured to open and close the rear sliding door;
a front seat (30) provided in a vehicle compartment side with respect to the front side door, the front seat being pivotable around a shaft along a vehicle up-down direction so that a seat portion thereof is turned toward an outer side in a vehicle width direction;
door angle detecting means (22) configured to detect an opening degree of the front side door along with an opening-closing operation of the front side door;
a seat driving portion (54) provided in the front seat and configured to pivot the front seat; and
control means (56) configured to control the door driving portion and the seat driving portion based on a detection result of the door angle detecting means, wherein:
based on the detection result of the door angle detecting means, when the control means determines that the vehicle is parked in a space where the front side door is able to be opened sufficiently, the control means controls the rear sliding door so as not to be open-operated; and
based on the detection result of the door angle detecting means, when the control means determines that the vehicle is parked in a space where the front side door is not able to be opened sufficiently, the control means controls the seat driving portion to pivot the front seat, and the control means controls the door driving portion to open-operate the rear sliding door.
